# DEMANDE DE BREVET EUROPEEN

(11) **EP 4 070 877 A1**
(43) Date de publication de la demande: **12.10.2022**
(21) Numéro de dépôt: 22166873.4
(22) Date de dépôt: 06.04.2022
(51) Int. Cl.: B01D 53/34, B01D 53/86, F23G 7/06

(54) **PROCÉDÉ ET DISPOSITIF D'ÉPURATION D'EFFLUENTS GAZEUX CONTENANT DU PROTOXYDE D'AZOTE**

(30) Priorité: 08.04.2021 FR 2103613
(71) Demandeur: ENERCAT, 56270 Ploemeur (FR)
(72) Inventeur: LE LAMER, Olivier, 69007 LYON (FR); ROHART, Emmanuel, 69007 LYON (FR); SERVE, Adrien, 69007 LYON (FR)
(74) Mandataire: Opilex

(57) **Abrégé**

Procédé d'épuration d'un effluent gazeux contenant au moins du N₂O, comprenant les étapes suivantes :
une première réaction catalytique de l'effluent gazeux dans un premier régénérateur,
une étape de combustion de l'effluent gazeux dans une chambre de combustion (1),
une deuxième réaction catalytique de l'effluent gazeux dans un deuxième régénérateur,
procédé dans lequel la circulation de l'effluent gazeux dans le dispositif est séquentiellement modifiée de manière à ce que chaque régénérateur (2, 3, 4) soit alternativement le premier régénérateur puis le deuxième régénérateur, chaque régénérateur comprenant un accumulateur de chaleur et
un catalyseur comprenant au moins une zéolithe choisie parmi les zéolithes de type ferriérite échangées au fer et les zéolithes béta échangées au fer, et dispositif correspondant.

## Description

L'invention concerne le domaine de l'épuration des effluents gazeux notamment les effluents contenant des composés gazeux azotés et plus particulièrement de l'oxyde nitreux ou protoxyde d'azote : N₂O.

Le protoxyde d'azote est un gaz essentiellement produit par la combustion de matériaux carbonés tels que les hydrocarbures et les composés azotés. Il provient à la fois de sources naturelles notamment de certains micro-organismes des sols ou des océans et de sources humaines notamment de la combustion de matières organiques ou fossiles, des stations d'épuration des eaux usées, de l'épandage du lisier, d'engrais azotés, de la synthèse chimique en milieu nitrique.

Le protoxyde d'azote fait partie des principaux gaz à effet de serre, contributeurs de la destruction de la couche d'ozone. Par conséquent, il demeure important de développer des procédés permettant d'abattre la concentration en protoxyde d'azote dans les gaz présentant des flux d'émission importants.

Les procédés d'épuration des gaz décrits dans l'art antérieur sont plus fréquemment destinés à réduire les NOx par réduction catalytique sélective ou SCR.

Les procédés d'épuration de gaz contenant du protoxyde d'azote, encore appelés « procédés d'abattement du N₂O » consistent généralement en une décomposition thermique ou catalytique du N₂O en azote (N₂) et oxygène (O₂).

Les décompositions catalytiques du N₂O sont souvent effectuées en utilisant des catalyseurs composés de zéolithes échangées avec des métaux de transition ou des métaux précieux ; ou encore des composés d'oxydes notamment d'alumine, silice, titane, cérine, zircone, imprégnés par des métaux précieux. En particulier la demande de brevet US 2008/0044334A1 concerne un procédé pour la décomposition catalytique du N₂O en présence d'un catalyseur comprenant une zéolithe chargée d'un premier métal choisi parmi par le ruthénium, le rhodium, l'argent, le rhénium, l'osmium, l'iridium, le platine et l'or et un second métal choisi parmi le chrome, le manganèse, le fer, le cobalt, le nickel et le cuivre. Cette demande de brevet ne décrit pas le procédé particulier selon la présente invention dans lequel le sens de circulation de l'effluent gazeux est séquentiellement modifié, ni le catalyseur particulier utilisé selon la présente invention.

L'abattement catalytique du N₂O requiert une température minimale de l'ordre de 350°C. En effet ce composé gazeux contenu dans les gaz de procédés tels que les incinérations, procédés chimiques, combustions doit être réchauffé pour permettre son abattement. L'énergie nécessaire à cette opération engendre un surcoût non négligeable, autant par l'investissement supplémentaire en matériel de type brûleur ou batterie électrique, que par la consommation énergétique associée.

Dans l'optique de réduire la consommation énergétique, la technologie des incinérateurs catalytiques régénératifs a été initialement développée pour l'épuration de COV. Cette technologie, basée sur l'optimisation de la récupération de chaleur, permet une consommation d'énergie plus faible que dans les procédés catalytiques standards.

Il demeure toujours un besoin de procédés catalytiques d'abattement du N₂O qui soient peu onéreux et présentent des performances, en particulier thermiques, améliorées, sur un large domaine de concentrations de N₂O. En outre, il demeure également un besoin de procédés catalytiques d'abattement du N₂O qui soient également performants vis-à-vis de l'épuration de NOx et également des COV, si présents.

Les inventeurs ont montré que l'utilisation d'un dispositif de type oxydateur thermique régénératif comprenant au moins un catalyseur particulier permet de répondre à ce besoin.

Un premier objet de l'invention vise un procédé d'épuration d'un effluent gazeux contenant au moins du N₂O, de préférence au moins 10 ppm volumiques de N₂O, dans un dispositif comprenant au moins deux régénérateurs reliés par une chambre de combustion, ledit procédé comprenant au moins les étapes suivantes, dans cet ordre :
une première réaction catalytique de l'effluent gazeux dans un premier régénérateur,
une étape de combustion de l'effluent gazeux dans la chambre de combustion à une température allant de 600°C à 1200°C,
une deuxième réaction catalytique de l'effluent gazeux dans un deuxième régénérateur différent du premier régénérateur,
procédé dans lequel le sens de circulation de l'effluent gazeux dans le dispositif est séquentiellement modifié de manière à ce que chaque régénérateur soit alternativement le premier régénérateur puis le deuxième régénérateur et en ce que le premier régénérateur d'une séquence soit le deuxième régénérateur de la séquence précédente, chaque régénérateur comprenant au moins un accumulateur de chaleur et au moins un catalyseur comprenant au moins une zéolithe choisie parmi les zéolithes de type férrierite échangées au fer et les zéolithes béta échangées au fer.

De préférence, le catalyseur comprend en outre au moins une zéolithe choisie parmi les zéolithes échangées par un cation métallique d'un métal choisi dans le groupe formé par le cuivre, le cobalt, le platine, le palladium, le rhodium, le ruthénium et leurs mélanges.

La modification, de manière séquentielle, de la circulation de l'effluent gazeux dans le dispositif permet de maintenir une température élevée dans les régénérateurs du dispositif, au niveau du catalyseur. Cette température généralement allant de 350 à 700°C.

Un deuxième objet de l'invention vise un dispositif pour la mise en œuvre du procédé selon l'invention comprenant au moins une chambre de combustion et au moins des premier et deuxième régénérateurs, lesdits régénérateurs étant reliés par la chambre de combustion, ledit dispositif comprenant aussi un système de ventilation configuré pour générer l'écoulement dudit effluent du premier régénérateur vers le deuxième régénérateur, ledit dispositif étant tel que chaque régénérateur comprend au moins un accumulateur de chaleur et au moins un catalyseur comprenant au moins une zéolithe choisie parmi les zéolithes de type ferriérite échangées au fer et les zéolithes béta échangées au fer.

Le procédé et le dispositif selon l'invention permettent d'assurer de bonnes performances en particulier thermiques, avec un rendement de l'ordre de 90%, et en particulier de bonnes performances de la première réaction catalytique dans le premier régénérateur et de la deuxième réaction catalytique dans le deuxième régénérateur.

Le procédé et le dispositif selon l'invention permettent un taux d'abattement du N₂O très satisfaisant sur un large domaine de concentrations de N₂O.

Un autre avantage de l'invention, en particulier du catalyseur particulier utilisé dans l'invention est qu'il peut aussi réduire les NOx.

Plus particulièrement, le procédé selon la présente invention permet une conversion du N₂O d'au moins 80 %, cette conversion pouvant atteindre 95 % voire 99% en fonction des conditions opératoires. Lorsque l'effluent à traiter contient du N₂O et des NOX alors en présence d'un réducteur, le N₂O et les NOX sont tous les deux convertis avec des rendements d'au moins 80 %, cette conversion pouvant atteindre 95 % voire 99% en fonction des conditions opératoires.

En outre, la présente invention permet également l'oxydation des COV. Par COV, on entend les composés organiques volatils définis dans la directive n° 1999/13/CE du 11/03/99 relative à la réduction des émissions de composés organiques volatils dues à l'utilisation de solvants organiques dans certaines activités et installations.

En conséquence, le procédé et le dispositif selon l'invention permettent une épuration satisfaisante de l'effluent à traiter avec de bons rendements, notamment des taux satisfaisants de conversion des principaux contaminants notamment du N₂O, des NOx et des COV, ils permettent de réduire les émissions de gaz polluants avec un coût énergétique global réduit.

### Définitions

Par « régénérateur » au sens de la présente invention, on entend une chambre comprenant à la fois au moins un catalyseur et au moins un accumulateur de chaleur. Ledit régénérateur, encore appelé catalyseur régénératif, permet à la fois la réaction de décomposition notamment du N₂O au moyen du catalyseur et un échange de calories avec le gaz *via* l'accumulateur de chaleur.

Par « premier régénérateur », on entend le régénérateur où a lieu la première réaction catalytique de l'effluent gazeux. Par « deuxième régénérateur », on entend le régénérateur où a lieu la deuxième réaction catalytique de l'effluent gazeux. En conséquence, l'effluent gazeux est toujours traité d'abord dans le premier régénérateur puis dans le deuxième régénérateur.

Par « un deuxième régénérateur différent du premier régénérateur », on entend que les régénérateurs sont des entités distinctes. Néanmoins ces régénérateurs sont généralement similaires c'est-à-dire qu'ils comprennent les mêmes éléments : le(s) même(s) accumulateur(s) de chaleur et le(s) même(s) catalyseur(s).

Dans le présent texte, les intervalles, notamment de température, sont définis de façon abrégée afin d'éviter de décrire chacune des valeurs et toutes les valeurs de cet intervalle, cependant toute valeur appropriée dans l'intervalle peut être choisie comme la valeur supérieure, la valeur inférieure ou les valeurs terminales de l'intervalle. Par exemple, un intervalle de 0,1 à 1 ,0 représente les valeurs terminales de 0,1 et 1,0, ainsi que les valeurs intermédiaires de 0,2, 0,3, 0,4, 0,5, 0,6, 0,7, 0,8, 0,9, et tous les intervalles intermédiaires compris dans 0,1 à 1 ,0, tels que 0,2 à 0,5, 0,2 à 0,8, 0,7 à 1 ,0, etc. Un intervalle défini comme étant « compris entre la valeur A et la valeur B » inclut les valeurs A et B et est donc équivalent à un intervalle « allant de la valeur A à la valeur B ».

L'invention porte également sur les variantes suivantes. L'homme du métier comprendra que chacune des caractéristiques des variantes suivantes peut être combinée indépendamment aux caractéristiques ci-dessus, sans pour autant constituer une généralisation intermédiaire.

Le catalyseur est une zéolithe choisie parmi les zéolithes de type ferriérite échangées au fer et les zéolithes béta échangées au fer.

Chaque régénérateur comprend au moins un accumulateur de chaleur catalysé. De préférence l'accumulateur de chaleur catalysé est choisi parmi les céramiques enduites de catalyseur et les céramiques présentant une structure alvéolaire en nid d'abeille, le catalyseur étant disposé dans les alvéoles.

La céramique est choisie dans le groupe formé par la cordiérite, la mullite et l'alumine.

Chaque régénérateur comprend au moins un accumulateur inerte. Ainsi le régénérateur comprend au moins un accumulateur de chaleur catalysé et au moins un accumulateur inerte.

Le dispositif comprend une chambre de combustion et trois régénérateurs.

### Dispositif

Comme déjà mentionné le dispositif selon l'invention comprend plusieurs zones dont au moins une chambre de combustion des gaz et au moins deux régénérateurs, lesdits régénérateurs étant reliés entre eux par la chambre de combustion. Avantageusement, le dispositif comprend plusieurs, notamment 2, 3, 4, 5, régénérateurs reliés entre eux par la chambre de combustion.

Selon une variante préférée le dispositif comprend au moins trois régénérateurs, et de manière particulièrement préférée il comprend trois régénérateurs. Cette variante particulière permet d'intervenir sur le troisième régénérateur pendant le fonctionnement du procédé. En particulier cette variante permet de purger, nettoyer le troisième régénérateur et de régénérer le catalyseur du troisième régénérateur notamment lorsque le gaz à traiter comprend des polluants auxquels le catalyseur est sensible.

Chaque régénérateur comprend au moins un accumulateur de chaleur présentant une capacité thermique élevée et un catalyseur particulier.

Selon une première variante, l'accumulateur et le catalyseur sont séparés, c'est-à-dire que le régénérateur utilisé selon l'invention comprend plusieurs éléments dont au moins un élément contenant un accumulateur de chaleur et au moins un autre élément contenant un catalyseur.

Selon une deuxième variante, préférée, l'accumulateur et le catalyseur correspondent à un seul élément, c'est-à-dire que le régénérateur utilisé selon l'invention comprend au moins un élément qui est à la fois un accumulateur de chaleur et un catalyseur, dans la suite du texte l'expression « accumulateur de chaleur catalysé » est utilisée pour désigner cette variante.

En particulier le régénérateur peut comprendre un substrat accumulateur de chaleur dont la surface est enduite d'un catalyseur, ou le régénérateur peut comprendre un substrat poreux et un catalyseur dans les pores du substrat.

Avantageusement, l'accumulateur de chaleur est en céramique et présente une structure alvéolaire de type nid d'abeille, le catalyseur étant disposé dans les alvéoles de l'accumulateur. Cette variante permet d'augmenter la surface de contact entre le catalyseur et l'effluent. De manière préférée, le catalyseur présente une densité de cellules comprise entre 40 et 600 Cpsi de préférence 100 et 400 Cpsi. Par Cpsi, « Cells per square inch » en langue anglaise, on entend le nombre de cellules par pouces carrés.

Selon la présente invention, le régénérateur comprend au moins un élément choisi parmi les éléments dans lesquels l'accumulateur et le catalyseur sont séparés et les éléments de type accumulateurs de chaleur catalysés. Le régénérateur peut en outre comprendre au moins un accumulateur supplémentaire non catalysé, encore appelé « accumulateur inerte ».

Le procédé selon l'invention permet donc un taux de récupération de chaleur élevé notamment par l'utilisation d'un système mettant en œuvre plusieurs zones de transfert de chaleur couplées à plusieurs zones de réactions catalytiques.

Selon une variante, préférée, de l'invention, le régénérateur comprend au moins un accumulateur de chaleur catalysé et au moins un accumulateur inerte. Avantageusement l'accumulateur de chaleur catalysé est en céramique et présente une structure alvéolaire de type nids d'abeille. Cette variante permet d'optimiser les taux d'abattement des polluants.

L'accumulateur de chaleur permet le transfert de chaleur, c'est-à-dire de calories, au gaz qui le traverse.

Avantageusement l'accumulateur de chaleur est un matériau céramique choisi dans le groupe formé par la cordiérite, la mullite, l'alumine.

Chaque régénérateur comprend aussi au moins un catalyseur choisi parmi les zéolithes de type férrierite échangées au fer et les zéolithes béta échangées au fer, de manière préférée le catalyseur est une zéolithe choisie parmi les zéolithes de type ferriérite échangées au fer et les zéolithes béta échangées au fer. De préférence le catalyseur comprend en outre au moins une zéolithe choisie parmi les zéolithes échangées par un cation métallique d'un métal choisi dans le groupe formé par le cuivre, le cobalt, le platine, le palladium, le rhodium, le ruthénium et leurs mélanges.

Ces catalyseurs sont particulièrement stables thermiquement et peuvent être utilisés à des températures élevées notamment celles mises en œuvre dans l'invention. Ils permettent l'obtention de performances élevées notamment une bonne efficacité catalytique conduisant à un bon niveau d'abattement.

Avantageusement les zéolithes de type ferriérite échangées au fer présentent un ratio Si/Al allant de 7 à 11, de préférence allant de 8 à 9.

Avantageusement les zéolithes de type ferriérite échangées au fer présentent un taux de fer allant de 0,2 à 2% en poids de fer par rapport au poids total de la zéolithe.

Avantageusement les zéolithes de type béta échangées au fer présentent un ratio Si/Al allant de 11 à 30.

Avantageusement les zéolithes de type béta échangées au fer présentent un taux de fer allant de 0,2 à 5%, et de préférence de 1 à 3 % en poids de fer par rapport au poids total de la zéolithe.

Le catalyseur peut également comprendre une zéolithe échangée par un cation métallique d'un métal choisi dans le groupe formé par le cuivre, le cobalt, le platine, le palladium, le rhodium, le ruthénium. Avantageusement lesdites zéolithes présentent un taux de métal allant de 0,2 à 5%, en poids par rapport au poids total de la zéolithe.

Avantageusement, chaque catalyseur comprend un cation d'un seul métal.

Lorsqu'il traverse le premier régénérateur, l'effluent gazeux à traiter est chauffé par les calories cédées par le premier régénérateur, plus particulièrement par le/les accumulateur(s) de chaleur du premier régénérateur. Au niveau du catalyseur, la température va de 350 à 700°C.

Le dispositif comprend également une chambre de combustion, dont la température va de 600 à 1200°C, classiquement utilisée dans les oxydateurs thermiques régénératifs dits RTO pour « regenerative thermal oxidiser », pour l'oxydation des COV.

Le dispositif peut également comprendre un moyen d'injection de réducteur pour permettre la réduction des oxydes d'azote si présents.

En outre, l'étape de combustion va également permettre de chauffer l'effluent gazeux avant son admission dans le deuxième régénérateur puis son échappement du dispositif.

Lorsqu'il traverse le deuxième régénérateur, l'effluent gazeux chauffé cède des calories au deuxième régénérateur, plus particulièrement à/aux accumulateur(s) de chaleur du deuxième régénérateur. Au niveau du catalyseur, la température va de 350 à 700°C.

Le dispositif comprend également des vannes à l'entrée de chacune des zones. Ces vannes permettent de modifier le sens de circulation de l'effluent gazeux. En effet comme mentionné ci-après, chacun des régénérateurs est utilisé séquentiellement en tant que premier réacteur traversé par l'effluent lors de la première réaction catalytique puis en tant que deuxième réacteur traversé par l'effluent lors de la deuxième réaction catalytique, chaque séquence étant comprise entre 1 à 5 minutes.

En outre, de manière préférée, le dispositif comprend au moins un moyen d'injection de réducteur dans le dispositif. Le(s) moyen(s) d'injection de réducteur sont avantageusement situés en amont de chaque régénérateur.

### Procédé

Comme mentionné, la présente invention concerne un procédé d'épuration d'un effluent gazeux contenant au moins du N₂O, de préférence au moins 10 ppm en volume de N₂O, de manière préférée de 50 ppm à 10% en volume de N₂O par rapport au volume total de l'effluent gazeux.

Le procédé selon l'invention comprend au moins les trois étapes suivantes, dans cet ordre : une première étape de réaction catalytique de l'effluent gazeux dans un premier régénérateur,
une étape de combustion de l'effluent gazeux à une température allant de 600°C à 1200°C,
une deuxième étape de réaction catalytique de l'effluent gazeux dans un deuxième régénérateur différent du premier régénérateur.

Lors de la première étape de réaction catalytique, l'effluent gazeux à traiter traverse un premier régénérateur contenant au moins un accumulateur de chaleur et un catalyseur, l'accumulateur et le catalyseur pouvant être séparés ou réunis au sein d'un même élément.

Lorsque la température dans le premier régénérateur atteint la température de décomposition du N₂O, alors la réduction catalytique s'amorce. En pratique cette réaction a lieu dès que le procédé atteint son régime nominal c'est-à-dire son régime normal de fonctionnement.

La température d'abattement du N₂O dépend principalement de la nature du catalyseur et des espèces gazeuses en présence. Cette température est d'au moins 350°C et est de préférence comprise entre 350°C et 700°C.

En fonction de l'origine de l'effluent à traiter, celui-ci peut comprendre d'autres gaz que le N₂O, classiquement l'effluent à traiter peut également comprendre des NOx et/ou des COV.

En particulier, l'effluent gazeux à traiter peut comprendre au moins 10 ppm en volume de NOx, de manière préférée de 50 ppm à 10% en volume de NOx par rapport au volume total de l'effluent gazeux.

Si l'effluent gazeux contient du NOx, en particulier au moins 10 ppm en volume de NOx, alors la température d'abattement du N₂O est d'au moins 400°C et de préférence est comprise entre 400°C et 650°C.

Cette gamme de températures est comprise dans la gamme de températures atteintes par les catalyseurs des régénérateurs du dispositif selon l'invention.

Avantageusement, la réduction du N₂O est effectuée en présence d'un composé azoté et/ou comprenant de l'hydrogène et/ou du carbone. Les composés suivants sont généralement utilisés à titre de réducteurs du N₂O : l'ammoniac, l'urée, l'hydrogène, les hydrocarbures en C₁-C₄ en particulier le méthane.

Les gaz réducteurs peuvent entrer dans la composition de l'effluent à traiter ou ils peuvent être introduits dans l'effluent à traiter *via* au moins un moyen d'injection de réducteur.

En outre le catalyseur utilisé selon l'invention permet également de décomposer les NOx, en présence d'un composé réducteur dès qu'une température de 200°C est atteinte.

Selon l'invention, l'effluent gazeux à traiter contient du N₂O, il peut également contenir au moins un composé choisi parmi le groupe formé par les NOx en particulier NO₂ et NO, les COV, le CO, l'ammoniac, l'urée, l'hydrogène.

Selon une première variante préférée, l'effluent gazeux à traiter selon l'invention contient du N₂O et des NOx en particulier NO₂ et NO.

Selon une deuxième variante préférée, l'effluent gazeux à traiter selon l'invention contient du N₂O et des COV.

Selon une troisième variante préférée, l'effluent gazeux à traiter selon l'invention contient du N₂O, des NOx, en particulier NO₂ et NO, et des COV.

Le procédé selon l'invention peut donc comprendre une étape d'introduction d'un réducteur avant chacune des étapes de réaction catalytique.

Lors de l'étape de combustion, grâce à l'oxygène atmosphérique présent dans l'effluent gazeux, les COV sont oxydés par voie thermique, ainsi que le CO si présent et le dioxyde d'azote peut se réduire thermodynamiquement en monoxyde d'azote. En outre, lors de cette étape, les NOx éventuellement présents sont réduits en présence d'un réducteur approprié comprenant de l'azote et/ou de l'hydrogène.

Lors de la deuxième étape de réaction catalytique, l'effluent gazeux traverse le deuxième régénérateur contenant un accumulateur de chaleur et un catalyseur. L'effluent gazeux est déjà en partie traité c'est-à-dire que tout ou une partie du N₂O et des NOx ont été éliminés. De plus l'effluent gazeux, chauffé dans la chambre de combustion, entre dans le deuxième régénérateur à une température supérieure ou égale à la température de décomposition du N₂O. La deuxième étape de réaction catalytique permet de poursuivre l'épuration du N₂O et des NOx.

Le dispositif selon la présente invention comprend également un système de ventilation configuré pour générer la circulation dudit effluent du premier régénérateur vers le deuxième régénérateur. Le système de ventilation, éventuellement avec vannes permet de commander de circulation de l'effluent gazeux

Le dispositif selon la présente invention peut ainsi comprendre au moins une vanne configurée pour modifier séquentiellement le sens de circulation de l'effluent dans le premier régénérateur. En particulier chacune des vannes est connectée à un moyen de fermeture/ouverture de ladite vanne. Généralement, les moyens de fermeture/ouverture des vannes reçoivent des ordres d'un centre de commande apte à diriger l'effluent entrant dans le dispositif dans le premier régénérateur, puis en sortie de la chambre de combustion dans un régénérateur différent du premier régénérateur, dit le deuxième régénérateur.

La mise en œuvre d'un tel système de vannes relève des compétences de l'homme du métier.

D'autres caractéristiques et avantages de l'invention ressortiront clairement de la description qui en est faite ci-après, à titre indicatif et nullement limitatif, en référence au dessin annexé.

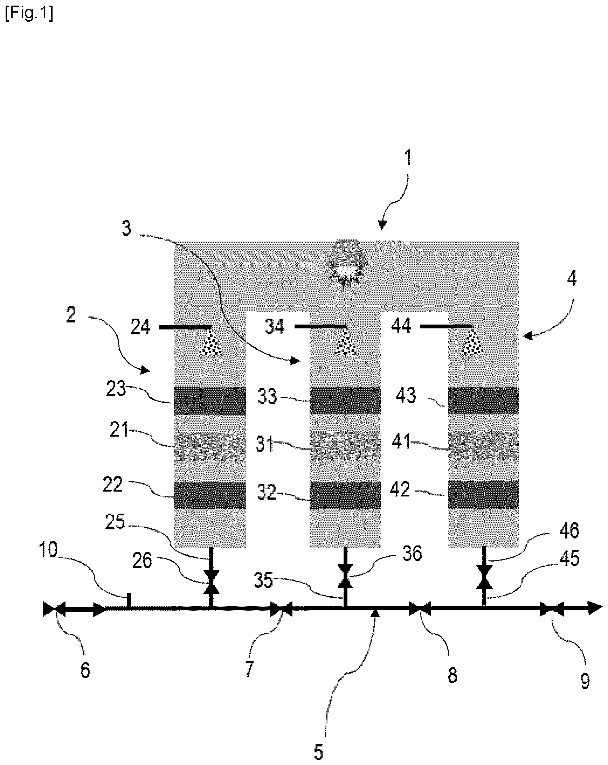

[Fig.1] présente un dispositif selon la présente invention comprenant une chambre de combustion 1, trois régénérateurs 2, 3, 4 et une conduite 5 de circulation du gaz dans le dispositif. Le régénérateur 2 comprend un accumulateur de chaleur catalysé 21, deux accumulateurs de chaleur inertes 22, 23 et un moyen d'injection de réducteur 24. Le régénérateur 3 comprend un accumulateur de chaleur catalysé 31, deux accumulateurs de chaleur inertes 32, 33 et un moyen d'injection de réducteur 34. Le régénérateur 4 comprend un accumulateur de chaleur catalysé 41, deux accumulateurs de chaleur inertes 42, 43 et un moyen d'injection de réducteur 44. La conduite 5 est munie d'une vanne 6 d'entrée de l'effluent à traiter, d'un moyen d'injection de réducteur 10, d'une vanne 9 de sortie de l'effluent traité. La conduite 5 est reliée à une conduite 25 de circulation des gaz dans le régénérateur 2, la conduite 25 est munie d'une vanne 26. La conduite 5 est reliée à une conduite 35 de circulation des gaz dans le régénérateur 3, la conduite 35 est munie d'une vanne 36. La conduite 5 est reliée à une conduite 45 de circulation des gaz dans le régénérateur 4, la conduite 45 est munie d'une vanne 46. La conduite 5 est munie d'une vanne 7 située entre la connexion à la conduite 25 et la connexion à la conduite 35 et une vanne 8 située entre la connexion à la conduite 35 et la connexion à la conduite 45.

Une mise en œuvre du procédé selon l'invention est décrite de façon détaillée ci-dessous en relation avec la figure 1. Cette mise en œuvre décrit un procédé qui a atteint son régime nominal c'est-à-dire après n-1 séquences suite auxquelles, le dispositif a atteint sa température de fonctionnement.

Selon la séquence n du procédé, encore appelé cycle n, et conformément à la première étape, l'effluent à traiter est introduit dans le dispositif par la conduite 5 sur laquelle la vanne 6 est en position ouverte, la vanne 7 est en position fermée. En outre la vanne 26 est en position ouverte. Ainsi selon cette disposition, l'effluent à traiter est introduit dans le régénérateur 2 par la conduite 25. Dans le régénérateur 2, l'effluent à traiter traverse successivement l'accumulateur de chaleur inerte 22 où il est réchauffé, puis l'accumulateur de chaleur catalysé 21 où il est réchauffé et où se déroule la première réaction catalytique, notamment de réduction du N₂O, et enfin l'accumulateur de chaleur inerte 23 où il est à nouveau réchauffé.

Conformément à la deuxième étape du procédé selon l'invention, l'effluent entre ensuite dans la chambre de combustion 1 où il est réchauffé et où les COV éventuellement présents sont oxydés.

Conformément à la troisième étape du procédé selon l'invention, l'effluent est ensuite introduit dans le deuxième régénérateur qui est le régénérateur 3. Dans le régénérateur 3, l'effluent à traiter traverse successivement l'accumulateur de chaleur inerte 33 où il cède des calories, puis l'accumulateur de chaleur catalysé 31 où il cède des calories et où se déroule la deuxième réaction catalytique, notamment de réduction du N₂O, et enfin l'accumulateur de chaleur inerte 32 où il cède à nouveau des calories.

L'effluent sort du régénérateur 3 *via* la conduite 35 sur laquelle la vanne 36 est en position ouverte. L'effluent sort ensuite du dispositif *via* la conduite 5 sur laquelle la vanne 7 est en position fermée et les vannes 8 et 9 sont en position ouverte. En outre la vanne 46 est fermée.

Selon la séquence n+1 du procédé, encore appelé cycle n+1, la première étape de réaction catalytique de l'effluent gazeux à traiter est effectuée dans un premier régénérateur qui correspond au deuxième régénérateur dans lequel a été effectuée la deuxième étape de réaction catalytique de la séquence n. Cette succession de séquences permet un gain énergétique puisque le premier régénérateur de la séquence n+1 a été réchauffé à la deuxième étape de la séquence précédente.

Ainsi, selon la séquence n+1 du procédé, et conformément à la première étape du procédé selon l'invention, l'effluent à traiter est introduit dans le dispositif par la conduite 5 sur laquelle les vannes 6 et 7 sont en position ouverte alors que la vanne 8 est en position fermée. En outre la vanne 36 est en position ouverte alors que la vanne 26 et en position fermée. Ainsi selon cette disposition, l'effluent à traiter est introduit dans le régénérateur 3 par la conduite 35. Dans le régénérateur 3, l'effluent à traiter traverse successivement l'accumulateur de chaleur inerte 32 où il est réchauffé, puis l'accumulateur de chaleur catalysé 31 où il est réchauffé et où se déroule la première réaction catalytique, notamment de réduction du N₂O, et enfin l'accumulateur de chaleur inerte 33 où il est à nouveau réchauffé. Conformément à la deuxième étape du procédé selon l'invention, l'effluent entre ensuite dans la chambre de combustion 1 où il est réchauffé et où les COV éventuellement présents sont oxydés.

Conformément à la troisième étape du procédé selon l'invention, l'effluent est ensuite introduit dans le deuxième régénérateur qui est le régénérateur 4. Dans le régénérateur 4, l'effluent à traiter traverse successivement l'accumulateur de chaleur inerte 43 où il cède des calories, puis l'accumulateur de chaleur catalysé 41 où il cède des calories et où se déroule la deuxième réaction catalytique, notamment de réduction du N₂O, et enfin l'accumulateur de chaleur inerte 42 où il cède à nouveau des calories. L'effluent sort du régénérateur 4 *via* la conduite 45 sur laquelle la vanne 46 est en position ouverte. L'effluent sort ensuite du dispositif *via* la conduite 5 sur laquelle la vanne 8 est en position fermée et la vanne 9 est en position ouverte.

Dans la séquence n+2 de ce procédé, la première étape de réaction catalytique se déroule dans le régénérateur 4 et la deuxième étape de réaction catalytique se déroule dans le régénérateur 2.

Ainsi selon une variante, la variante 1 présentée ci-dessus, les régénérateurs utilisés dans chaque séquence sont comme suit : séquence n, le premier régénérateur est le régénérateur 2 et le deuxième régénérateur est le régénérateur 3 ; séquence n+1, le premier régénérateur est le régénérateur 3 et le deuxième régénérateur est le régénérateur 4 ; séquence n+2, le premier régénérateur est le régénérateur 4 et le deuxième régénérateur est le régénérateur 2. Le procédé selon la variante 1 se poursuit suivant une succession de séquences telle que la séquence n+3 correspond à la séquence n.

Selon une autre variante, la variante 2, les régénérateurs utilisés dans chaque séquence sont comme suit : séquence n, le premier régénérateur est le régénérateur 2 et le deuxième régénérateur est le régénérateur 4 ; séquence n+1, le premier régénérateur est le régénérateur 4 et le deuxième régénérateur est le régénérateur 3 ; séquence n+2, le premier régénérateur est le régénérateur 3 et le deuxième régénérateur est le régénérateur 2. Le procédé selon la variante 2 se poursuit suivant une succession de séquences telle que la séquence n+3 correspond à la séquence n.

Les exemples qui suivent illustrent l'invention sans en limiter la portée.

### EXEMPLES

Les exemples ci-dessous ont été mis en œuvre dans un dispositif conforme à la figure 1, en appliquant une circulation des gaz tel que décrite ci-dessus et correspondant à la variante 1.

Les exemples ont été mis en œuvre avec, dans chaque régénérateur, deux accumulateurs de chaleur inertes en céramique de type cordiérite et un accumulateur de chaleur catalysé de type nid d'abeille en céramique de type cordiérite de 300 Cpsi. Le tableau 1 présente, pour chaque exemple : la concentration volumique des différents gaz de l'effluent à traiter, ainsi que le pourcentage de conversion de chaque gaz présent.

Le sens de circulation de l'effluent gazeux dans le dispositif a été modifié au bout de 3 minutes : la durée de chaque séquence était donc de 3 minutes.

### Exemple 1

L'exemple 1 a été mis en œuvre avec un accumulateur de chaleur catalysé de forme nids d'abeille de 300 Cpsi et un catalyseur de type férrierite de ratio Si/Al de 10. Cette zéolithe a été échangée au fer de manière telle que la teneur en fer correspondait à 1,3% poids par rapport au poids total de la zéolithe et le taux de chargement de la céramique correspondait à 110 g de zéolithe échangée par litre de céramique.

En outre le ratio : débit de gaz en entrée du dispositif/volume de catalyseur, encore appelé VVH était de 3000 h⁻¹ et la température en entrée de catalyseurs de chaque régénérateur était de 400°C, pour une température dans la chambre de combustion de 800°C.

### Exemple 2

L'exemple 2 a été mis en œuvre avec un accumulateur de chaleur catalysé de forme nids d'abeille de 300 Cpsi et un catalyseur de type béta de ratio Si/Al de 19. Cette zéolithe a été échangée au fer de manière telle que la teneur en fer correspondait à 2% poids par rapport au poids total de la zéolithe et le taux de chargement de la céramique correspondait à 150 g de zéolithe échangée par litre de céramique.

En outre le ratio : débit de gaz en entrée du dispositif/volume de catalyseur, encore appelé VVH était de 5000 h⁻¹ et la température en entrée de catalyseurs de chaque régénérateur était de 490°C pour une température dans la chambre de combustion de 900°C.

**[Tableau 1]**

| Exemple | 1 | 2 |
|---|---|---|
| concentration volumique des gaz | N₂O : 900 ppm | N₂O : 5000 ppm |
| | NOx : 5000 ppm | |
| | | COV : 150 ppm |
| | NH₃ : 5000 ppm | |
| % de conversion N₂O | 81 | 95 |
| % de conversion NOx | 95 | NA |
| % de conversion COV | NA | 99 |

### NA signifie « non applicable ».

Dans chaque exemple, le procédé a été mis en œuvre pendant 3 heures.

Les résultats des exemples montrent des niveaux d'abattement du N₂O supérieurs à 80 %, et supérieurs à 95% pour des concentrations en N₂O en entrée fortes. Il convient de noter par ailleurs que le dispositif de l'invention permet l'abattement des COV a plus de 99%. L'exemple 2 montre que le procédé selon l'invention permet l'abattement simultané de N₂O et des COV et l'exemple 1 montre que le procédé selon l'invention permet la conversion simultanée de N₂O et des NOX avec toujours des rendements très satisfaisants.]

## Revendications

1. Procédé d'épuration d'un effluent gazeux contenant au moins du N₂O, de préférence au moins 10 ppm volumiques de N₂O, dans un dispositif comprenant au moins deux régénérateurs (2, 3, 4) reliés par une chambre de combustion (1), ledit procédé comprenant au moins les étapes suivantes, dans cet ordre :
une première réaction catalytique de l'effluent gazeux dans un premier régénérateur,
une étape de combustion de l'effluent gazeux dans la chambre de combustion à une température allant de 600°C à 1200°C,
une deuxième réaction catalytique de l'effluent gazeux dans un deuxième régénérateur différent du premier régénérateur,
procédé dans lequel le sens de circulation de l'effluent gazeux dans le dispositif est séquentiellement modifié de manière à ce que chaque régénérateur soit alternativement le premier régénérateur puis le deuxième régénérateur et en ce que le premier régénérateur d'une séquence soit le deuxième régénérateur de la séquence précédente, **caractérisé en ce que** chaque régénérateur comprend au moins un accumulateur de chaleur et au moins un catalyseur comprenant au moins une zéolithe choisie parmi les zéolithes de type ferriérite échangées au fer et les zéolithes béta échangées au fer.

2. Procédé selon la revendication 1 dans lequel le catalyseur comprend en outre au moins une zéolithe choisie parmi les zéolithes échangées par un cation métallique d'un métal choisi dans le groupe formé par le cuivre, le cobalt, le platine, le palladium, le rhodium, le ruthénium et leurs mélanges.

3. Procédé selon l'une quelconque des revendications précédentes dans lequel chaque régénérateur comprend au moins un accumulateur de chaleur catalysé.

4. Procédé selon la revendication 3 dans lequel l'accumulateur de chaleur catalysé est choisi parmi les céramiques enduites de catalyseur et les céramiques présentant une structure alvéolaire en nid d'abeille, le catalyseur étant disposé dans les alvéoles.

5. Procédé selon l'une quelconque des revendications précédentes dans lequel chaque régénérateur comprend au moins un accumulateur inerte.

6. Procédé selon l'une quelconque des revendications précédentes dans lequel l'effluent contient au moins 10 ppm volumiques de NOx.

7. Procédé selon l'une quelconque des revendications précédentes dans lequel l'effluent contient au moins un réducteur choisi parmi l'ammoniac, l'urée, l'hydrogène, les hydrocarbures en C₁-C₄ en particulier le méthane.

8. Procédé selon la revendication 7 comprenant une étape lors de laquelle le réducteur est introduit dans l'effluent.

9. Procédé selon l'une quelconque des revendications précédentes dans lequel l'effluent contient des composés organiques volatils.

10. Dispositif pour la mise en œuvre du procédé selon l'une quelconque des revendications précédentes comprenant au moins une chambre de combustion (1) et au moins des premier et deuxième régénérateurs (2, 3) , lesdits régénérateurs étant reliés par la chambre de combustion, chaque régénérateur comprenant au moins un accumulateur de chaleur, ledit dispositif comprenant aussi un système de ventilation configuré pour générer l'écoulement dudit effluent du premier régénérateur vers le deuxième régénérateur, ledit dispositif étant tel que chaque régénérateur comprend au moins un accumulateur de chaleur et au moins un catalyseur comprenant au moins une zéolithe choisie parmi les zéolithes de type ferriérite échangées au fer et les zéolithes béta échangées au fer.

11. Dispositif selon la revendication 10 dans lequel le catalyseur comprend en outre au moins une zéolithe choisie parmi les zéolithes échangées par un cation métallique d'un métal choisi dans le groupe formé par le cuivre, le cobalt, le platine, le palladium, le rhodium, le ruthénium et leurs mélanges.

12. Dispositif selon la revendication 10 ou 11 dans lequel chaque régénérateur comprend au moins un accumulateur de chaleur catalysé.

13. Dispositif selon la revendication précédente dans lequel l'accumulateur de chaleur catalysé est choisi parmi les céramiques enduites de catalyseur et les céramiques présentant une structure alvéolaire en nid d'abeille, le catalyseur étant disposé dans les alvéoles.

14. Dispositif selon l'une quelconque des revendications 10 à 13 comprenant en outre au moins un accumulateur inerte.

15. Dispositif selon l'une quelconque des revendications 10 à 14 comprenant une chambre de combustion (1) et trois régénérateurs(2,3,4).
